# EUROPEAN PATENT APPLICATION

(11) **EP 2 073 373 A2**
(43) Date of publication of application: **24.06.2009**
(21) Application number: 08254004.8
(22) Date of filing: 15.12.2008
(51) Int. Cl.: H02P 23/00

(54) **Method for controlling motor of air conditioner**

(30) Priority: 21.12.2007 KR 20070135490
(71) Applicant: LG Electronics Inc., Seoul 150-721 (KR)
(72) Inventor: Hwan, Sun Ho, Changwon-si Kyungsangnam-do 641-110 (KR); Jung, Han Su, Changwon-si Kyungsangnam-do 641-110 (KR); Lee, Chung Hun, Changwon-si Kyungsangnam-do 641-110 (KR)
(74) Representative: Palmer, Jonathan R.

(57) **Abstract**

The present invention relates to a method of controlling a three-phase motor of an air conditioner by using an inverter including a total of three pairs of upper and lower arm switching elements connected in parallel, wherein the motor includes a stator coil and a rotor of a permanent magnet and the upper and lower arm switching elements are connected in series to form a pair, the method including the steps of performing field weakening control in order to improve a velocity of the rotor by offsetting an amount of magnetic flux, generated by the permanent magnet, in a state where a PWM signal having a maximum duty is applied to the motor, and controlling a zero vector application time applied to the upper arm switching elements or the lower arm switching elements to become a specific value or more. Accordingly, a minimum zero vector application time can be secured.

## Description

### TECHNICAL FIELD

The present invention relates to a method of controlling a motor of an air conditioner, and more specifically to a method of controlling a motor of an air conditioner, which can ensure a minimum zero vector application time.

### BACKGROUND ART

An air conditioner is an apparatus disposed in space, such as rooms, dining rooms, office rooms, and shops, and adapted to control temperature, moisture, cleaning and air stream of the air in order to maintain pleasant indoor environments.

An air conditioner is generally divided into a unit type and a separate type. The unit type and the separate type are identical in terms of their functions. The unit type includes an integrated cooling and heat-dissipation function and is installed in a wall of a house or hung on a wall. In the separate type, an indoor unit having the cooling/heating functions is installed indoors and an outdoor unit having the heat-dissipation and compression functions is installed outdoors and thereafter both the units are connected by refrigerant ducts.

Meanwhile, the air conditioner uses motors for compressors, fans, and so on and also employs a method of controlling the motors for driving them. That is, a motor control method of converting commercial AC power into DC power and converting the DC power into AC power of a specific frequency again is used.

When controlling the motor, counter electromotive force caused by the motor is generated. This counter electromotive force functions to limit the velocity of the motor. As the velocity of the motor increases, the amount of counter electromotive force caused increases, which makes a high-speed operation of the motor difficult. In particular, even if a maximum value of DC power is used, a high-speed operation of the motor becomes difficult. In order to prevent this problem, a variety of schemes, such as an increase of the maximum value of DC power or field weakening control, have been discussed.

### SUMMARY OF INVENTION

An object of the present invention is to provide a method of controlling a motor of an air conditioner, which can ensure a minimum zero vector application time.

In accordance with an aspect of the present invention there is provided a method according to the accompanying claims.

A method of controlling a three-phase motor of an air conditioner by using an inverter including a total of three pairs of upper and lower arm switching elements connected in parallel, wherein the motor includes a stator coil and a rotor of a permanent magnet and the upper and lower arm switching elements are connected in series to form a pair, the method including the steps of performing field weakening control in order to improve a velocity of the rotor by offsetting an amount of magnetic flux, generated by the permanent magnet, in a state where a PWM signal having a maximum duty is applied to the motor, and controlling a zero vector application time applied to the upper arm switching elements or the lower arm switching elements to become a specific value or more.

A method of controlling a three-phase motor of an air conditioner by using an inverter including a total of three pairs of upper and lower arm switching elements connected in parallel, wherein the motor includes a stator coil and a rotor of a permanent magnet and the upper and lower arm switching elements are connected in series to form a pair, the method including the steps of performing field weakening control in order to improve a velocity of the rotor by offsetting an amount of magnetic flux, generated by the permanent magnet, in a state where a PWM signal having a maximum duty is applied to the motor, and controlling a zero vector application time applied to the upper arm switching elements or the lower arm switching elements to become a specific value or more where an output current flowing through the motor can be detected.

A method of controlling a motor of an air conditioner in accordance with an embodiment of the present invention can ensure an application time of a minimum zero vector. Thus, an output current can be detected stably. Consequently, at the time of control, accurate control is made possible.

### DESCRIPTION OF DRAWINGS

FIG. 1 is a schematic view of an air conditioner pertinent to the present invention;
FIG. 2 is a block diagram showing a motor controller of an air conditioner, which is related to a method of controlling a motor of the air conditioner in accordance with the present invention;
FIG. 3 is a diagram showing field weakening control;
FIG. 4 is a timing diagram showing SVPWM waveforms; and
FIG. 5 is an internal block diagram of a microcomputer of FIG. 2.

### DETAILED DESCRIPTION

Hereafter, embodiments of the present invention will be described in detail with reference to the accompanying drawings.

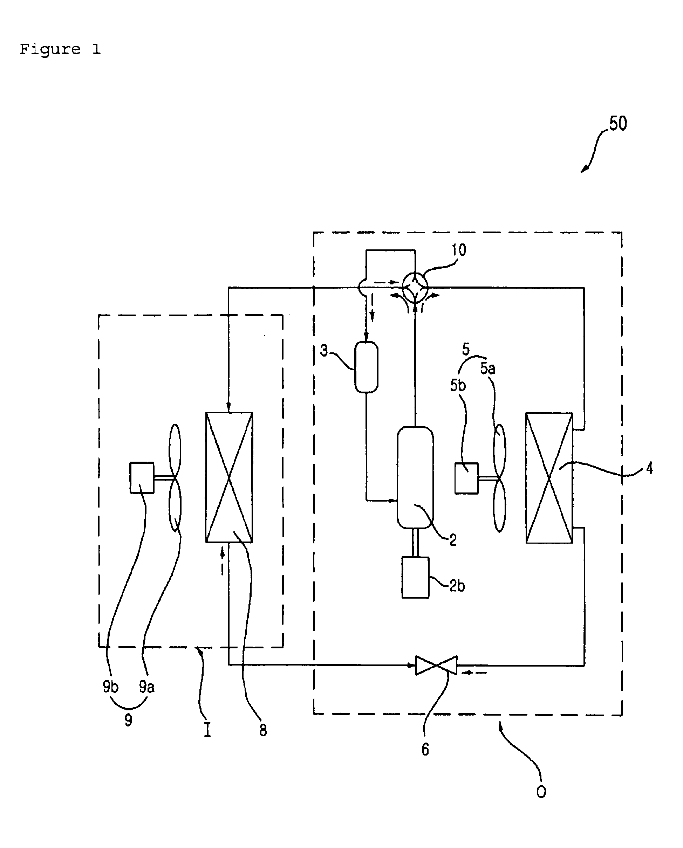

FIG. 1 is a schematic view of an air conditioner pertinent the present invention.

Referring to the drawing, an air conditioner 50 is largely divided into an indoor unit I and an outdoor unit O.

The outdoor unit O includes a compressor 2 functioning to compress refrigerant, a motor 2b for the compressor for driving the compressor, an outdoor-side heat exchanger 4 functioning to dissipate heat of compressed refrigerant, an outdoor ventilation fan 5, including an outdoor fan 5a disposed on one side of the outdoor heat exchanger 5 and configured to accelerate heat dissipation of refrigerant and a motor 5b for rotating the outdoor fan 5a, an expansion mechanism 6 for expanding condensed refrigerant, a cooling/heating switching valve 10 for switching the flow passage of compressed refrigerant, an accumulator 3 for temporarily storing vaporized refrigerant, removing moisture and alien substance from the refrigerant and supplying refrigerant of a specific pressure to the compressor, and so on.

The indoor unit I includes an indoor-side heat exchanger 8 disposed indoor and performing a cooling/heating function, an indoor ventilation fan 9 disposed on one side of the indoor-side heat exchanger 8 and including an indoor fan 9a for accelerating heat dissipation of refrigerant and a motor 9b for rotating the indoor fan 9a, and so on.

At least one indoor-side heat exchanger 8 can be installed. The compressor 2 can employ at least one of an inverter compressor and a constant speed compressor. Further, the air conditioner 50 can be constructed as a cooling device for cooling the indoor or a heat pump for cooling or heating the indoor.

Meanwhile, the motor in the motor controller of the air conditioner in accordance with an embodiment of the present invention can be each of motor 2b, 5b,and 9b for operating the compressor, the outdoor fan, and the indoor fan.

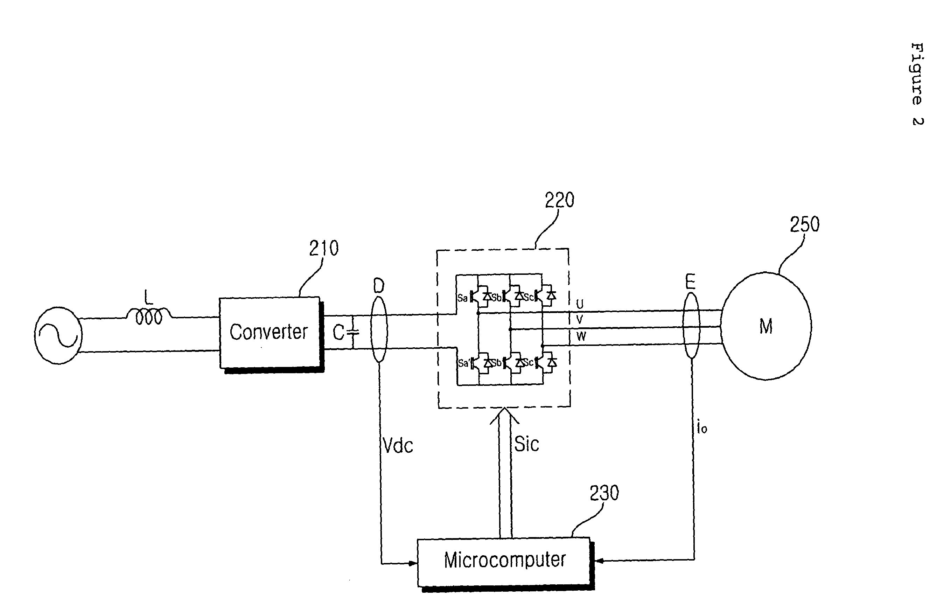

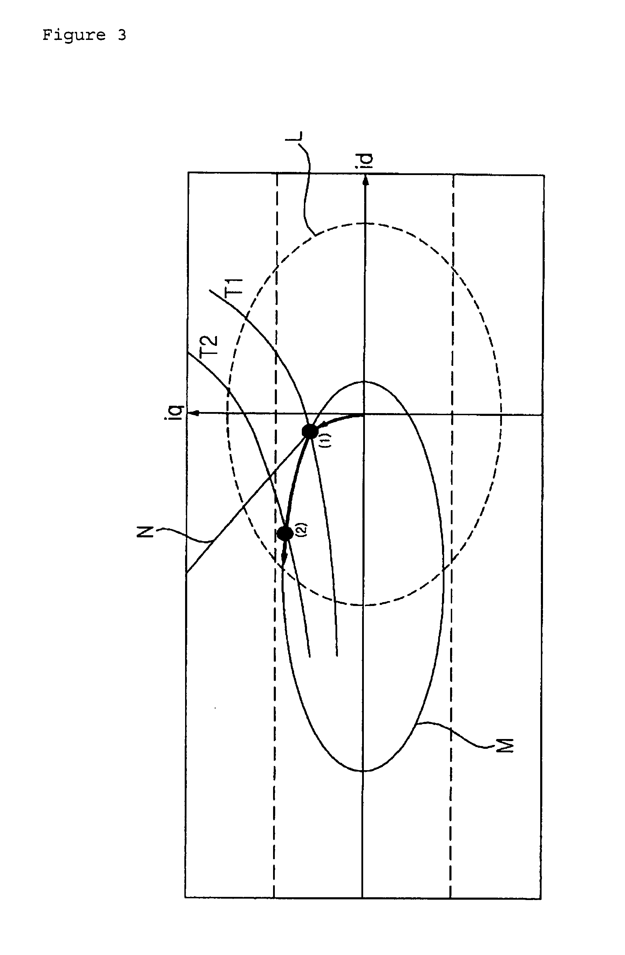

FIG. 2 is a block diagram showing a motor controller of an air conditioner, which is related to a method of controlling a motor of the air conditioner in accordance with the present invention. FIG. 3 is a diagram showing field weakening control.

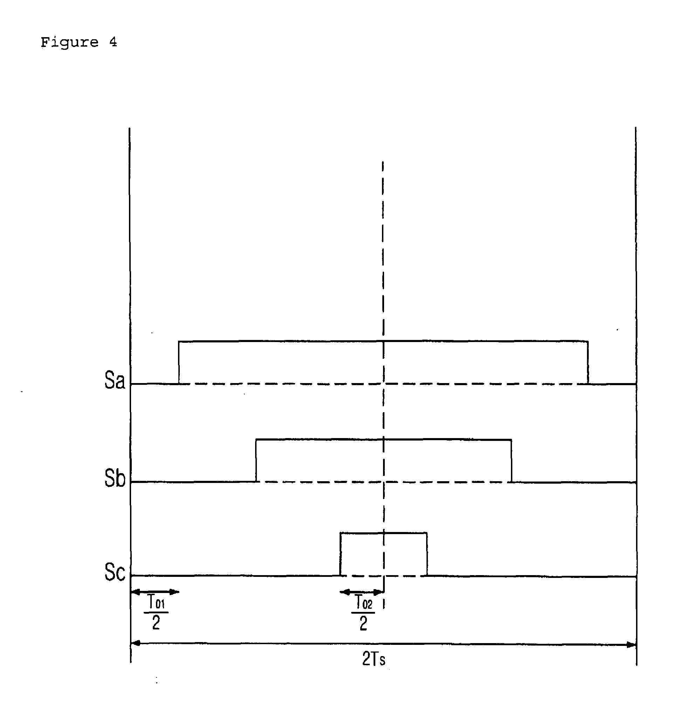

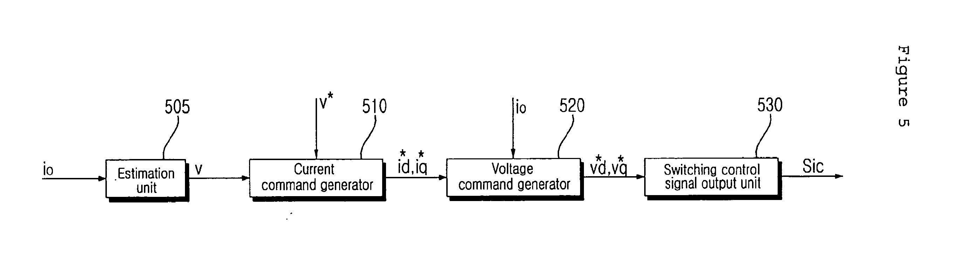

FIG. 4 is a timing diagram showing SVPWM waveforms. FIG. 5 is an internal block diagram of the microcomputer of FIG. 2.

Referring to the drawings, the motor controller 200 of the air conditioner in accordance with the present invention includes a converter 210, an inverter 220, and a microcomputer 230. The motor controller 200 of the air conditioner of FIG. 2 may further include a reactor L, a smoothing capacitor C, dc terminal voltage detection means, output current detection means E, and so on.

The reactor L is disposed between commercial AC power and the converter 210 and performs power factor correction or a boosting operation. The reactor L can also function to limit the harmonic current through high-speed switching of the converter.

The converter 210 converts the commercial AC power, passing through the reactor L, into DC power and outputs converted DC power. Although, in the drawing, the commercial AC power has been illustrated as single-phase AC power, it may be three-phase AC power. An internal configuration of the converter 210 may vary depending on the type of commercial AC power. For example, in the case of single-phase AC power, a half-bridge type converter having two switching elements and four diodes connected may be used. In the case of three-phase AC power, six switching elements and six diodes may be used. The converter 210 includes a plurality of switching elements and performs a boosting operation, power factor improvements and DC power conversion through the switching operation.

The smoothing capacitor C is connected to the output terminal of the converter 210 and functions to smooth converted DC power output from the converter 210. The output terminal of the converter 210 is hereinafter referred to as a 'dc terminal' or a 'dc link terminal'. The DC voltage smoothed at the dc terminal is applied to the inverter 220.

The dc terminal voltage detection means D detects a dc terminal voltage Vdc across the smoothing capacitor C. To this end, the dc terminal voltage detection means D includes a resistor element, etc. The detected dc terminal voltage Vdc is input to the microcomputer 230 for purposes of generating a converter switching control signal Scc or field weakening control. Contents regarding field weakening control will be described later on with reference to FIG. 3.

The inverter 220 includes a plurality of inverter switching elements. The inverter 220 converts smoothed DC power into three-phase AC power of a specific frequency through the on/off operations of the switching elements and outputs the converted AC power. More specifically, an upper arm switching element and a lower arm switching element, which are connected in series, form one pair. A total of three pairs of the upper and lower arm switching elements Sa&Sa', Sb&Sb', and Sc&Sc' are connected in parallel.

Here, the three-phase AC power output from the inverter 220 is applied to respective phases u, v, and w of a three-phase motor 250. The three-phase motor 250 is equipped with a stator and a rotor. Each phase AC power having a specific frequency is applied to the stator coil of each phase, so that the rotor is rotated. Types of the three-phase motor 250 can be a BLDC motor.

The output current detection means E detects an output current at the output terminal of the inverter 220, which flows through the motor 250. The output current detection means E may be located between the inverter 220 and the motor 250 and may employ a current sensor, a current transformer (CT), a shunt resistor or the like for current detection.

Further, the output current detection means E may be a shunt resistor having one terminal connected to the three lower arm switching elements of the inverter 220. A detected output current iₒ is input to the microcomputer 230, and an inverter switching control signal Sic is generated based on the detected output current iₒ.

The microcomputer 230 controls the inverter 220. To this end, the microcomputer 230 outputs the inverter switching control signal Sic, that is, a PWM signal to the inverter 220 and therefore controls the on/off operations of the switching elements within the inverter 220.

Referring to FIG. 5, the microcomputer 230 includes an estimation unit 505, a current command generator 510, a voltage command generator 520, and a switching control signal output unit 530.

The estimation unit 505 estimates the position and velocity v of the rotor of the motor based on the output current iₒ detected by the output current detection means E.

The current command generator 510 generates d,q-axis current command values i^{*}_{d}, i^{*}_{q} based on the estimated velocity v and a velocity command value v^{*} through a PI controller, etc.

The voltage command generator 520 generates d,q-axis voltage command values v^{*}_{d}, v^{*}_{q} based on the d,q-axis current command values i^{*}_{d}, i^{*}_{q} and a detected output current iₒ through a PI controller, etc.

The switching control signal output unit 530 outputs the switching control signal Sic, that is, a PWM signal based on the d,q-axis voltage command values v^{*}_{d}, v^{*}_{q} in order to drive the inverter switching elements.

Here, the output current iₒ input to the voltage command generator 520 can be a value that is transformed in the d,q axes.

Meanwhile, the microcomputer 230 performs field weakening control in order to drive the motor to a maximum velocity. If a permanent magnet of the motor 250 is rotated, counter electromotive force is generated. The amount of counter electromotive force increases as the velocity of the motor 250 increases. Thus, the velocity of the motor 250 is limited according to a limit value of DC power (dc terminal power). As a solution for solving this problem, field weakening control for controlling the velocity of the motor by generating current, which offsets the amount of magnetic flux generated in the permanent magnet, is performed.

Referring to FIG. 3, an abscissa axis is a d-axis current i_{d} of the rotating reference frames and a vertical axis is a q-axis current iq. A curve L denotes a current limit curve from the d-axis current i_{d} and the q-axis current iq. A curve M denotes a voltage limit curve according to the limit value of the dc terminal voltage Vdc. Meanwhile, a curve N denotes an optimal current command curve decided according to the velocity command value v^{*} in the current command generator (510 of FIG. 5).

A period (1) of FIG. 3 shows that the current command values i^{*}_{d}, i^{*}_{q} are decided according to the optimal current command curve N in such a way as to track the velocity command value v^{*} as the velocity command value v^{*} increases.

Meanwhile, if the current command values i^{*}_{d}, i^{*}_{q} are decided according to the period (1) and the voltage limit curve M is reached, the current command values of the motor do no longer track the optimal current command curve N. That is, it becomes a state where a maximum value of the dc terminal voltage Vdc is used, so that the velocity of the motor 250 is no longer increased.

To this end, the microcomputer 230 performs field weakening control for controlling the velocity of the motor by generating current, which offsets the amount of magnetic flux generated in the permanent magnet. That is, the d-axis current command value i^{*}_{d} is further lowered below the optimal current command curve N and the q-axis current command value i^{*}_{q} is increased that much. In other words, the microcomputer 230 tracks a period (2) in order to decide the current command values i^{*}_{d}, i^{*}_{q} according to the voltage limit curve M.

In such field weakening control, referring to FIG. 4, in the case in which the optimal current command curve N is tracked and the voltage limit curve M is then reached in the period (1), that is, the duty of the inverter switching control signal Sic output from the microcomputer 230 reaches a full duty, the period (2) is tracked.

Meanwhile, upon this field weakening control, the microcomputer 230 controls a first zero vector application time (Tₒ₁/2), applied to the upper arm switching elements Sa, Sb, and Sc within the inverter, or a second zero vector application time (Tₒ₂/2), applied to the lower arm switching elements Sa', Sb', and Sc' within the inverter, to become a specific value or more.

Here, the specific value can be decided based on the output current iₒ flowing through the motor 250. That is, the specific value is decided according to a minimum value of the output current iₒ at the time of field weakening control.

Meanwhile, the specific value is set based on a minimum duty ratio applied to the motor 250. When the minimum duty ratio is 10%, a corresponding time can become the specific value. This minimum duty ratio can be a value set to detect the output current iₒ.

Meanwhile, the full duty of the inverter switching control signal Sic can be set to 90%. This value can be set to detect the output current iₒ.

Consequently, upon field weakening control, the first zero vector application time (Tₒ₁/2) applied to the upper arm switching elements Sa, Sb, and Sc or the second zero vector application time (Tₒ₂/2) applied to the lower arm switching elements Sa', Sb', and Sc' is preferably set to be a specific time or more in which the output current detection means E can detect the output current iₒ. This is because, despite field weakening control, the switching control signal can be generated based on the output current iₒ by detecting the output current iₒ. That is, stable and accurate control is made possible.

Meanwhile, FIG. 4 shows on/off timings of the respective switching elements Sa, Sb, and Sc. Ts denotes a unit switching control time. When the upper arm switching element Sa becomes on, the lower arm switching element Sa' becomes off.

Therefore, the above-described embodiments should be construed to be illustrative and limitative from all aspects. Furthermore, the scope of the present invention is defined by the appended claims rather than the above detailed description. Thus, the present invention should be construed to cover all modifications or variations induced from the meaning and range of the appended claims and their equivalents.

The method of controlling a motor of an air conditioner in accordance with the present invention can be employed to ensure a minimum zero vector application time so that an output current can be detected stably when detecting the output current.

## Claims

1. A method of controlling a three-phase motor of an air conditioner by using an inverter including a total of three pairs of upper and lower arm switching elements connected in parallel, wherein the motor includes a stator coil and a rotor of a permanent magnet and the upper and lower arm switching elements are connected in series to form a pair, the method comprising the steps of:
performing field weakening control by offsetting an amount of magnetic flux, generated by the permanent magnet; and
controlling a zero vector application time applied to the upper arm switching elements or the lower arm switching elements to become a specific value or more.

2. The method according to claim 1, wherein the field weakening control is performed in a state where the PWM signal having a maximum duty is applied to the motor.

3. The method according to claim 1 or 2, wherein the specific value is set based on an amount of an output current flowing through the motor.

4. The method according to claim 1 or 2, wherein the specific value is set based on a minimum duty ratio applied to the motor.

5. The method according to claim 4, wherein the minimum duty ratio is 10%.

6. The method according to any one of the preceding claims, wherein the field weakening control is performed so that an amount of current in any one axis, of phase currents flowing through the three-phase motor, which are axially transformed into two axes according to rotating reference frames, is decreased.

7. The method according to claim 2, wherein a maximum duty ratio of the PWM pulse is 90%.
